# EUROPEAN PATENT APPLICATION

(11) **EP 1 774 857 A1**
(43) Date of publication of application: **18.04.2007**
(21) Application number: 06120369.1
(22) Date of filing: 08.09.2006
(51) Int. Cl.: A23L 1/01, A23L 1/217, A23L 1/00, A23L 1/164, A23L 1/18

(54) **Cooking method particularly for snacks such as potato chips and the like, and machine for performing the method**

(30) Priority: 14.10.2005 IT PD20050307
(71) Applicant: Bag Snacks S.r.l., 35015 Galliera Veneta PD (IT)
(72) Inventor: Girolimetto, Italo, 35014 FONTANIVA PD (IT)
(74) Representative: Modiano, Micaela Nadia

(57) **Abstract**

A method for cooking, particularly for snacks such as potato chips and the like. The particularity of the method resides in that it comprises the following operations:
- preheating a granular medium, for example food-grade salt, bringing it to a temperature between 180°C and 210°C, and accumulating it so as to form a bath in which the raw snack is to be immersed;
- immersing the raw snack in the salt bath;
- keeping the snack in the salt bath for such a time as to allow its complete expansion;
- separating the snack from the salt.

Cooking can be completed by a subsequent toasting operation, adapted to further reduce the moisture of the snack, improving its appearance and fragrance.

## Description

The present invention relates to a cooking method particularly for snacks such as potato chips and the like.

The invention also relates to a machine for performing the method.

Many kinds of snack are currently commercially widespread, and the ones obtained from cereals, tubers or similar foods, available in sealed packages in food stores and the like, in public concerns such as bars, canteens, pubs et cetera, are particularly noteworthy.

Currently known snack cooking methods are substantially of two kinds: toasting or frying (and optional subsequent toasting).

Toasting methods introduce the raw snack in a rotating drum provided with a spiral wall which is adapted to push the snacks introduced in the drum toward an outlet.

The snacks inside the drum are injected with air heated at approximately 280°C.

The drum, by turning, overturns the snacks being processed, exposes their entire surface to the stream of hot air, and makes them advance inside it.

This toasting method lasts approximately six minutes.

At the exit from the drum, the product undergoes one or more additional processes for flavoring it.

The toasting method using hot air replaces cooking the snack by frying, i.e., by immersion in oil brought to a temperature of 190°C; frying is much faster, since it lasts between 10 and 30 seconds, depending on the size and thickness of the snack.

However, it is known that cooking by frying in oil produces snacks which, no matter how thoroughly they are dried, still retain a certain amount of oil, which in addition to giving a greasy feeling to the snack (if not visually, certainly to the touch) carries fats and calories that are generally unwanted by the consumer.

However, known methods for cooking by toasting in hot air, while being effective and appreciated, have some drawbacks.

In addition to requiring a long cooking time (the six minutes mentioned earlier), these methods in fact do not ensure complete and balanced exposure of the snack to the hot air, producing snacks that have limited expansion, with external regions that are cooked unevenly or even burned in certain points.

These burned or more cooked regions are hard to bite (cracker effect) and cause the snack to lose the added value that is its friableness, a quality which is particularly appreciated by consumers.

The aim of the present invention is to provide a cooking method particularly for snacks such as potato chips and the like that solves the drawbacks revealed by known methods.

Within this aim, an object of the present invention is to provide a method which allows to obtain snacks that are cooked more evenly, are lighter and are more friable than snacks produced with known types of hot air method.

Another object of the present invention is to provide a method that is faster than toasting methods and therefore ensures higher productivity with respect to known types of method.

Another object of the present invention is to provide a machine for cooking in particular snacks such as potato chips and the like that is simple and cheap.

Another object of the present invention is to provide a cooking method particularly for snacks such as potato chips and the like and a machine for performing said method that can be produced cheaply with known systems and technologies.

This aim and these and other objects, which will become better apparent hereinafter, are achieved by a cooking method particularly for snacks such as potato chips and the like, characterized in that it comprises the following operations:
- preheating a granular medium, bringing it to a temperature between 180°C and 210°C, and accumulating it so as to form a bath in which the raw snack is to be immersed;
- immersing the raw snack in said bath of said granular medium;
- keeping the snack in said granular medium for such a time as to allow its complete expansion;
- separating the snack from the granular medium.

A machine for cooking particularly snacks such as potato chips and the like, in execution of a method as described above, is characterized in that it comprises:
- a mixing container, in which raw snacks are suitable to pass, pushed by feeder means;
- a region of accumulation of a preheated granular medium being defined in said container, said medium providing a bath suitable to receive the raw snacks;
- means for separating the expanded snacks from the granular medium;
- means for introducing the raw snacks in the container;
- means for the exit of the expanded snacks from the container.

Further characteristics and advantages of the invention will become better apparent from the following detailed description of a preferred but not exclusive embodiment thereof, illustrated by way of non-limiting example in the accompanying drawings, wherein:
Figure 1 is a schematic sectional view of a machine for performing a method according to the invention;

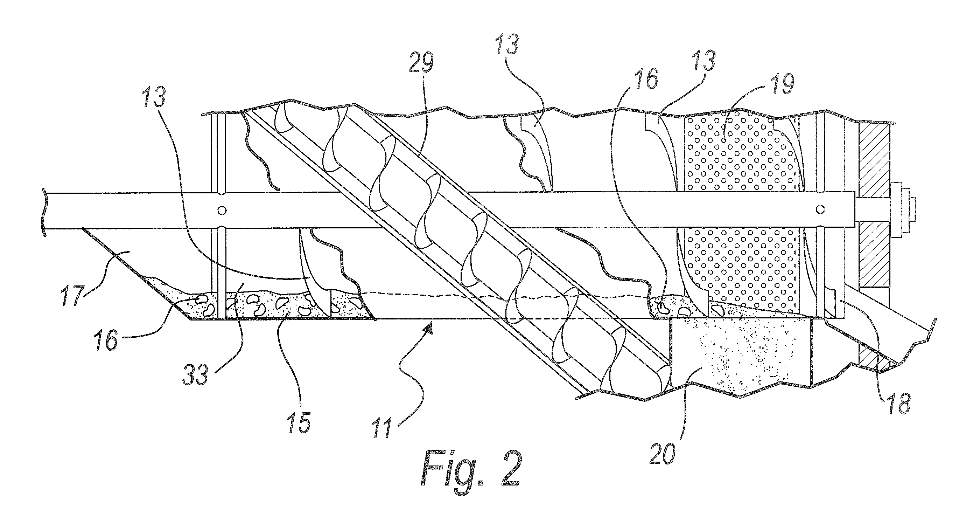

Figure 2 is a sectional view of a detail of Figure 1.

With reference to the figures, a machine for cooking particularly snacks such as potato chips and the like according to the invention is generally designated by the reference numeral 10.

The cooking method according to the invention comprises the following operations:
- preheating a granular medium, bringing it to a temperature between 180°C and 210°C, and accumulating it so as to form a bath in which the raw snack is to be immersed;
- immersing the raw snack in said granular medium;
- keeping the snack in the granular medium for such a time as to allow its complete expansion;
- separating the snack from the granular medium.

In the exemplary embodiment described here, the granular medium is food-grade salt, with which a salt bath is provided.

Such food-grade salt is sodium chloride (NaCl), preferably of the recrystallized type.

The expansion time of the snack in the salt bath does not exceed one minute and the retention of a snack being processed within the salt bath can last even just 15 seconds.

It should be noted that this timing closely approximates the typical time interval of cooking by frying (between 10 and 60 seconds).

Further, the expansion time is approximately one sixth of the time used with known toasting methods, which however produce an expansion of the snack that is often partial and uneven.

Immersion in the salt bath leads to uniform transfer of the heat from the salt to the raw snack by contact with it, with consequent uniform cooking of the snack.

Heat transmission, facilitated also by the swiftness with which salt transfers the accumulated heat to a body in contact, occurs by conduction, without the mediation of air, therefore more rapidly and in such a way as to reach even the innermost layers of the snack, improving its expansion with respect to what occurs with known methods.

The salt remains in its crystalline state and is replaced before it dissolves; in this way, the salt does not penetrate the snack being cooked and does not alter its salting, determined during the formation of the snack.

This method according to the invention is therefore faster and capable of more uniform heat transmission to the snacks being processed, and is such as to improve the expansion of the snack.

The method according to the invention is completed by a further toasting which follows the separation of the snack from the salt bath.

In this additional toasting, the snack expanded in the salt bath receives toasting by means of a jet of hot air, which is adapted to brown the snack, further reducing its degree of moisture and increasing its friableness and fragrance.

The moisture of the snack at the exit from the salt bath is approximately 3%, while after hot air toasting the moisture of the snack drops to 1%, improving the friableness of the snack.

The hot air jet has a temperature of approximately 220°C.

The method according to the invention does not use oil and therefore produces snacks that are less fatty than those obtained by frying and are at the same time cooked uniformly and deeply by way of the immersion in the salt bath.

A machine 10 for cooking particularly snacks such as potato chips and the like, in execution of the method described above, comprises first of all a mixing container, in which the raw snacks to be expanded are suitable to pass, being pushed by advancement means.

The mixing container is constituted by a rotating drum 11, which has a substantially horizontal axis and the shaft 27 of which is supported by a frame 28, and is moved by a first motor drive 12.

The advancement means are constituted by a spiral wall 13, which is arranged coaxially inside the drum 11 and is arranged so as to protrude radially from the internal surface 11a of the drum 11, with which it is rigidly coupled.

In said container there is an accumulation region for the granular medium, i.e., food salt, which is preheated to provide a salt bath suitable to receive the snacks to be toasted.

The salt accumulation region is provided by the bottom 33 of the drum 11, where the word "bottom" designates the part of the drum 11 that at each instant lies closest to the ground.

There are also means for separating the expanded snacks from the salt bath, means for introducing the raw snacks in the container, and means for the exit of the expanded snacks from the mixing container.

To further reduce the cost of the method, the machine comprises means for recovering and recirculating the salt for the salt bath, which are associated with means for heating said recovered salt.

The salt bath 15 in which the snacks 16 are immersed is made to advance by the rotation of the drum 11 and of the spiral wall 13 rigidly coupled thereto from the input region 17 of the drum 11 toward the output region 18 for the expanded snacks 16.

Proximate to the output region 18 and before it there are the means for separating the expanded snacks 16 from the salt bath 15.

The separation means are constituted by a grille-like annular portion 19 of the drum 11, which acts as a screen, its holes distributed on its cylindrical surface allowing the salt to fall into an underlying collecting hopper 20 and retaining the snacks 16 in the drum 11; the snacks continue to be pushed by the rotation of the wall 13 toward the output region 18.

The salt recovery and recirculation means comprise, in addition to the hopper 20, a screw feeder 21, which is actuated by a second motor drive 22.

The screw feeder 21 draws from the bottom of the hopper 20, making the salt accumulated thereat rise to pour it into the drum 11 by means of a duct 23, which conveys the salt from an opening on the tubular jacket 24, in which the screw feeder 21 works, into the underlying region 17 for entering the drum 11.

The opening on the tubular jacket 24 lies in the vicinity of the upper end 21 a of the screw feeder 21.

The salt heating means are constituted by an interspace 29 of the tubular jacket 24 in which the screw feeder 21 turns and inside which the salt flows.

Diathermic oil at approximately 220°C is made to flow in the interspace 29.

The interspace 29 lies within the tubular jacket 24 between the bottom of the hopper 20 and the upper end 21 a of the screw feeder 21.

By rising within the tubular jacket 24 by virtue of the rotation of the screw feeder 21, the salt is heated to approximately 190°C and is introduced in the drum 11 at this temperature.

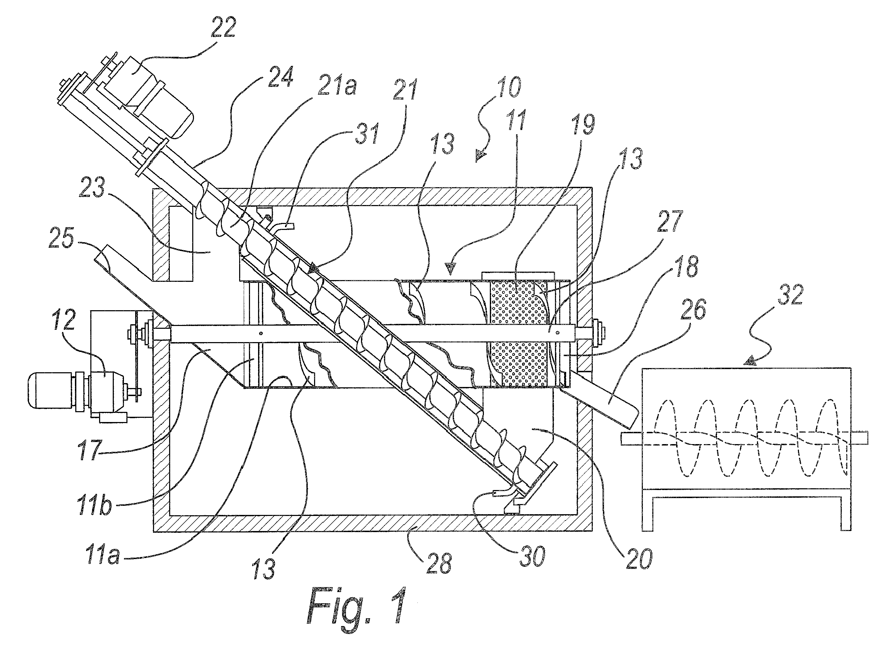

Figure 1 also illustrates the openings 30 and 31 for feeding and discharging the diathermic oil of the interspace 29.

The salt must be replaced periodically, since the gradual reduction of the dimensions of its grains increases the exchange surfaces, accelerating the cooling of the salt bath and therefore gradually reducing its efficiency.

The region 17 for entering the drum 11 is formed by an input chute 25, which conveys the raw snacks 16, carried by external conveyance means, not shown, toward the inlet 11b of the drum 11, where they encounter the salt bath 15 at 190°C.

The chute 25 in fact conveys toward the inlet 11b of the drum 11 also the salt at 190°C that falls from the upper end 21a of the screw feeder 21 through the duct 23.

The salt bath 15 is then restored continuously by the action of the screw feeder 21 and of the heating interspace 29 that surrounds it.

The means for introducing the snacks 16 are constituted by the chute 25.

The output means are constituted by a second chute 26, on which the expanded snacks 16 fall from the output region 18 from the drum 11.

The chute 26 conveys by gravity the expanded snacks 16 from retention within the salt bath toward packaging means, not shown for the sake of simplicity, or toward hot air toasting means, arranged in output from the drum 11.

The hot air toasting means, designated by the reference numeral 32 in Figure 1 and of a per se known type (for example of the rotary drum type), inject air at approximately 220°C onto the expanded snacks 16, so as to provide thereon a toasting which is adapted to decrease their degree of moisture to 1% and to give said snacks 16 a more appealing golden color in addition to improving their friableness and fragrance.

The machine 10 according to the invention as described above allows to perform the method according to the invention.

The machine 10 in fact allows to achieve the expansion of the snacks 16 without impregnating them with oil or toasting them unevenly and excessively, as occurs in toasting by means of hot air at 280°C.

The snacks that exit from the machine 10 are therefore lighter and healthier than snacks obtained with known machines and have improved fragrance and friableness, imparted to them by toasting in hot air at 220°C.

The method has much shorter execution times than methods for cooking by toasting (approximately one sixth) and very close to those of methods for cooking by frying.

Moreover, the exhausted salt, i.e., the salt that can no longer be used for the salt bath 15 and is accordingly extracted from the machine 10, may be recycled completely as food for animals without any contraindication, since it is ordinary sodium chloride.

In practice it has been found that the invention thus described solves the problems noted in known methods for cooking by toasting or frying particularly for snacks such as potato chips and the like.

In particular, the present invention provides a machine for performing such a method.

Moreover, the present invention provides a method according to the invention which allows to obtain snacks that are cooked more evenly and are lighter and more friable than snacks produced with known types of method for cooking by frying or toasting with hot air.

Furthermore, the present invention provides a method which is faster and therefore ensures greater or equal productivity with respect to known types of method.

Still further, the present invention provides a machine for cooking particularly snacks such as potato chips and the like that is simple and cheap.

Moreover, the present invention provides a cooking method particularly for snacks such as potato chips and the like and a machine for performing said method that can be obtained cheaply with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2005A000307 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for cooking by toasting, particularly for snacks such as potato chips and the like, **characterized in that** it comprises the following operations:
- preheating a granular medium, bringing it to a temperature between 180°C and 210°C, and accumulating it so as to form a bath in which the raw snack is to be immersed;
- immersing the raw snack in said granular medium;
- keeping the snack in said granular medium for such a time as to allow its complete expansion;
- separating the snack from the granular medium.

2. The method according to claim 1, **characterized in that** said retention time of the snack in the salt bath does not exceed one minute.

3. The method according to the preceding claims, **characterized in that** the granular medium is salt of the food-grade type.

4. The method according to claim 3, **characterized in that** said food-grade salt is preferably recrystallized sodium chloride (NaCl).

5. The method according to one or more of the preceding claims, **characterized in that** after separation from the salt bath, the expanded snack is toasted by means of a jet of hot air, which is adapted to brown the snack, further reducing its degree of moisture and increasing its friableness.

6. The method according to claim 5, **characterized in that** said jet of hot air has a temperature of approximately 220°C.

7. A machine for cooking particularly snacks such as potato chips and the like, in execution of a method according to the preceding claims, **characterized in that** it comprises:
- a mixing container, in which raw snacks are suitable to pass, pushed by advancement means;
- a region of accumulation of a preheated granular medium being formed in said container, said medium providing a bath (15) adapted to receive the raw snacks;
- means for separating the expanded snacks from the granular medium;
- means for introducing the raw snacks in the container;
- means for the exit of the expanded snacks from the container.

8. The machine according to claim 7, **characterized in that** it comprises means for recovering and recirculating the granular medium, which are associated with heating means for said granular medium.

9. The machine according to claims 7 and 8, **characterized in that** said mixing container is constituted by a rotating drum (11) whose axis is substantially horizontal and whose shaft (27) is supported by a frame (28) and is moved by a first motor drive (12).

10. The machine according to one or more of the preceding claims, **characterized in that** said advancement means are constituted by a spiral wall (13), which is arranged coaxially within said drum (11) and is arranged so as to protrude radially from the internal surface (11a) of the drum (11) to which it is rigidly coupled.

11. The machine according to one or more of claims 7 to 10, **characterized in that** said accumulation region for the granular medium is provided by the bottom (33) of the drum (11).

12. The machine according to one or more of claims 7 to 11, **characterized in that** said means for separating the snacks from the granular medium are constituted by a grille-like annular portion (19) of the drum (11), the holes of which, distributed on its cylindrical surface, allow the granular medium to fall into an underlying collecting hopper (20) and retain the snacks (16) in the drum (11).

13. The machine according to one or more of claims 7 to 12, **characterized in that** said recovery and recirculation means comprise said hopper (20) and a screw feeder (21), which is actuated by a second motor drive (22), said screw feeder (21) being adapted to draw the granular medium from the bottom of the hopper (20) and to make it rise within a tubular jacket (24) for containing the screw feeder (21) to transfer it into the drum (11) by means of a duct (23), which conveys it from an opening in the tubular jacket (24), in the underlying region (17) for entering the drum (11), said opening in the tubular jacket (24) being located in the vicinity of the upper end (21a) of the screw feeder (21).

14. The machine according to one or more of claims 7 to 13, **characterized in that** said means for heating the granular medium are constituted by an interspace (29) of the tubular jacket (24) in which the screw feeder (21) rotates, diathermic oil at approximately 220°C flowing within said interspace (29), said interspace (29) being arranged within the tubular jacket (24) between the bottom of the hopper (20) and the upper end (21a) of the screw feeder (21).

15. The machine according to one or more of claims 7 to 14, **characterized in that** said input means are constituted, at a region (17) for entering the drum (11), by an input chute (25), which conveys the raw snacks (16), carried by external conveyance means, toward the inlet (11b) of the drum (11), where they encounter the bath (15) of the granular medium, which has a temperature of approximately 190°C, said chute (25) being adapted to convey toward the inlet (11b) of the drum (11) also the granular medium at 190°C that falls from the upper end (21a) of the screw feeder (21) through the duct (23).

16. The machine according to one or more of claims 7 to 15, **characterized in that** said exit means are constituted by a second chute (26), on which the expanded snacks (16) fall from the region (18) for exiting from the drum (11), said chute (26) being adapted to convey said expanded snacks (16) toward packaging means or toward hot air toasting means, arranged in output with respect to the drum (11).

17. The machine according to one or more of claims 6 to 16, **characterized in that** it comprises hot air toasting means (32), which are arranged in output with respect to the drum (11) and are adapted to inject air at approximately 220°C onto the expanded snacks (16), so as to provide thereon a toasting which is suitable to reduce their degree of moisture to 1 %.
